# EUROPEAN PATENT SPECIFICATION

(11) **EP 2 659 967 B1**
(45) Date of publication and mention of the grant of the patent: **31.10.2018**
(21) Application number: 10861327.4
(22) Date of filing: 29.12.2010
(51) Int. Cl.: H01M 4/92, H01M 8/1018

(54) **PT-RU NANO-ALLOY/GRAPHENE CATALYST, PREPARATION METHOD AND USE THEREOF**
PT-RU-NANOLEGIERUNGS-/GRAPHENKATALYSATOR, VERFAHREN ZU SEINER HERSTELLUNG UND VERWENDUNG
CATALYSEUR NANO-ALLIAGE PT-RU / GRAPHÈNE, SON PROCÉDÉ DE PRÉPARATION ET SON UTILISATION

(43) Date of publication of application: 06.11.2013
(73) Proprietor: Ocean's King Lighting Science&Technology Co., Ltd., Shenzhen, Guangdong 518054 (CN)
(72) Inventor: ZHOU, Mingjie, Shenzhen Guangdong 518054 (CN); ZHONG, Linglong, Shenzhen Guangdong 518054 (CN); WANG, Yaobing, Shenzhen Guangdong 518054 (CN)
(74) Representative: Michalski Hüttermann & Partner Patentanwälte mbB
(86) International application number: PCT/CN2010/080449
(87) International publication number: WO 2012/088678

(56) References cited:
- EP-A1- 1 494 304
- EP-A1- 2 657 189
- CN-A- 101 214 437
- CN-A- 101 214 437
- CN-A- 101 740 786
- CN-A- 101 740 786
- CN-A- 101 745 384
- US-A1- 2007 161 501
- DONG L ET AL: "Graphene-supported platinum and platinum@?ruthenium nanoparticles with high electrocatalytic activity for methanol and ethanol oxidation", CARBON, ELSEVIER, OXFORD, GB, vol. 48, no. 3, 1 March 2010 (2010-03-01), pages 781-787, XP026804749, ISSN: 0008-6223 [retrieved on 2009-10-23]
- HUMMERS W S ET AL: "Preparation of graphite oxide", JOURNAL OF THE AMERICAN CHEMICAL SOCIETY, ACS PUBLICATIONS, US, vol. 80, no. 6, 20 March 1958 (1958-03-20) , page 1339, XP008127696, ISSN: 0002-7863

## Description

### FIELD OF THE INVENTION

The present invention relates to a field of electrochemical energy, and more particularly relates to a Pt-Ru nano-alloy/graphene catalyst used in proton exchange membrane fuel cell. The present invention also relates to a preparation method and a use of the Pt-Ru nano-alloy/graphene catalyst.

### BACKGROUND OF THE INVENTION

Proton exchange membrane fuel cell (PEMFC) is a new generation of power generation device using hydrogen as fuel, besides the general advantages of fuel cell (such as high energy conversion efficiency and environment-friendly, etc.), it has the outstanding advantages of high specific power and specific energy, low working temperature, quick start at room temperature, long life and so on, therefore it could be the most promising fuel cell.

DONG L ET AL: "Graphene-supported platinum and platinum ruthenium nanoparticles with high electrocatalytic activity for methanol and ethanol oxidation", CARBON, ELSEVIER, OXFORD, GB, vol. 48, no. 3, 1 March 2010 (2010-03-01), pages 781-787, XP026804749, ISSN: 0008-6223, refers to RtRu nanoparticles deposited on graphene.

CN 101 740 786 A refers to a preparation method of PtRu/graphene nano electro-catalyst, comprising the following steps of: ultrasonically dispersing oxidized nano graphite sheets into liquid polylol; then adding a chloroplatinic acid solution and a sodium acetate solution, sufficiently mixing, wherein the content of the oxidized nano graphite sheets contained in a mixture is 0.3-1.1 g/L, the concentration of chloroplatinic acid is 0.0004-0.002 mol/L, the concentration of ruthenium chloride is 0.0004-0.0013 mol/L, and the concentration of sodium acetate is 0.005-0.027 mol/L; transferring the mixture to a microwave hydro-thermal reaction kettle for microwave hydro-thermal reaction for 5-10 minutes; and filtering, washing and drying to obtain the PtRu/graphene nano electro-catalyst, wherein the mass fraction of a PtRu alloy contained in the PtRu/graphene nano electro-catalyst is 20-40 percent, the mass fraction of graphene is 80-60 percent, the atomic ratio of the PtRu alloy is Pt:Ru=1:2-1.5:1, and the liquid polylol is propanetriol or glycol. The preparation method has energy saving, fastness, simple process, and the like; and in addition, the prepared PtRu/graphene nano electro-catalyst has good electrocatalysis property for the oxidation of methanol and ethanol and is widely used as anode catalysts of direct methanol fuel cells.

CN 101 214 437 A refers to a reverse micelles method of preparing platinum ruthenium/carbon catalyst, which includes the following steps: 0.02 to 0.10mol/L chloroplatinic acid aqueous solution and 0.04 to 0.20 mol/L ruthenium trichloride aqueous solution are prepared to form water phase; hexamethylene is prepared into oil phase, sodium laurylsulfate is taken as surfactant and n-octyl alcohol is takenas cosurfactant; the mass ratio of sodium laurylsulfate, hexamethylene and n-octyl alcohol is 1:0.07 to 0.15:0.5 to 1.2; the product is mixed and added in carbon black, and the receives ultrasonic vibration and mechanical mixing for 20 to 60 min, so that a reverse micelle is loaded on the carbon black; a reducing agent, demulsifier acetone and solution are added for filtration and drying. The reverse micelle of the invention provides a micro environment, and can become an ideal place of nano particle synthetization. Because of the method of preparing nano particles, only simple equipments are needed, the operation is under room temperature, the metal particles have grain size which is easy to be controlled and spread quite evenly.

Electro-catalyst of PEMFC is one of the key factors to restrict its commercialization, thus, electro-catalyst researches has become the main contents of the researches of PEMFC. "The biggest regret of chemistry in the 20th century was the failure to develop the excellent fuel cell catalysts." Lippard pointed out in the comments to the development of chemistry in the 20th century, who was a chairman of the chemistry department of the Massachusetts Institute of Technology.

The preparation methods of catalyst have a great influence on the size and the crystalline state of Pt particle in catalysts, the preparation methods for Pt/C catalyst of the mainly reports are inorganic colloid method, impregnation method, sol-gel method and precipitation method etc.. These catalysts prepared by the conventional preparation methods have problems of poor dispersibility in particle, the uneven diameter of particle and harsh reaction conditions. Because the preparation process of catalyst determines the composition and structure of catalyst and thereby affects its catalytic performance, it is very important to study the preparation methods and processes of the catalyst.

The theories of graphene, which have been studied for more than 60 years, has been widely used to study the performance of the different structure of the carbonaceous material. In Science, 2009, vol 324: p1530, Geim pointed out that graphene is a carbon material having less than 10 layers of the layered structure of graphite molecules, and it has a higher specific surface area (the theoretical specific surface area of graphene can reach to 2620m²/g), which could provide more metal load position. Meanwhile, the graphene exhibits a strong quantum effect and has a good electronic conductivity. It is calculated according to the first principle that, platinum group elements can be stably loaded on the graphene, and the adsorption of carbon monoxide or hydrogen on the metal platinum particles will be reduced because of the presence of graphene, which facilitates the reaction in the fuel cell. Therefore, the graphene can be used as a good carbon carrier.

### SUMMARY OF THE INVENTION

According to the above problems, one object of the present invention is to provide a preparation method of a Pt-Ru nano-alloy/graphene catalyst, providing a graphite oxide according to claim 1, which is prepared by oxidizing graphite powder to obtain a graphite oxide according to a Hummers method, comprising the steps:
1. 20g 50 mesh of graphite powder, 10g of potassium persulfate and 10g of phosphorus pentoxide were added to concentrated sulfuric acid at a temperature of 80° C, and the mixture was stirred uniformly, cooled for more than 6 hours, washed to neutral and dried to obtain a sample, the dried sample was added to 200 to 250 mL of concentrated sulfuric acid at a temperature of 0° C, then 60 g of potassium permanganate was added, the mixture was heat preserved for 5 to 60 minutes at a temperature from 0° C to 20° C for 30 minutes, and then maintained in the oil bath at a temperature of 35° C for 1 to 2 hours, 920 mL of deionized water was slowly added, 15 minutes later, 2.8 L of deionized water containing 50 mL of hydrogen peroxide with a mass percentage concentration of 30% was then added, the mixture was hot filtrated while the color of the mixture became bright yellow, and then washed with 5 L of hydrochloric acid with a concentration of 10%, filtrated, and vacuum dried for 48 hours at a temperature of 60° C to obtain the graphite oxide;
2. adding the graphite oxide to water, forming a graphene oxide solution with uniform dispersion of monolithic layer after ultrasonic dispersion;
3. preparing a reverse micellar system containing a surfactant, a cosurfactant, an oil phase, a chloroplatinic acid, and a ruthenium chloride aqueous solution at room temperature;
4. adding the graphene oxide solution to the reverse micelle system dropwise, and adding a reducing agent dropwise in a water bath;
5. performing a reduction reaction to obtain an emulsion containing Pt-Ru nano-alloy and graphene;
6. adding a demulsifier to the emulsion dropwise, and loading the Pt-Ru nano-alloy on a carrier of the graphene; and
7. filtering, washing, drying the graphene loaded with Pt-Ru nano-alloy to obtain the Pt-Ru nano-alloy/graphene catalyst.

2. preparation of graphite oxide solution: the prepared graphite oxide is added to water and dispersed by ultrasonic dispersion, a graphene oxide solution with uniform dispersion of monolithic layer is formed;
3. preparation of reverse micelle system: a mixed system containing a surfactant (anionic surfactant or cationic surfactant, such as sodium benzenesulfonate, sodium dodecylbenzenesulfonate, aliphatic sulfate and aliphatic quaternary ammonium salt, etc.), a cosurfactant (e.g., n-octanol, n-nonyl alcohol, n-heptanol and n-hexyl alcohol), an oil phase (e.g., cyclohexane) and a chloroplatinic acid (H₂PtCl₆, with a molar concentration of 0.04 mol/L) and a ruthenium chloride (RuCl₃, with a molar concentration of 0.04mol/L) aqueous solution is prepared at room temperature, a uniform and stable reverse micelle system is formed under the effect of ultrasonic; and a mass ratio of the surfactant, the cosurfactant and the oil phase is 10:7:1;
4. formation of precursors: the prepared graphene oxide solution is slowly added to the reverse micelle system dropwise;
5. reduction of precursors: the excess reducing agent (such as hydrazine hydrate or sodium borohydride, and a molar amount of the reducing agent is 3 to 10 times of a molar amount of the chloroplatinic acid) is added to the reverse micelle system in a water bath at a temperature of 80°C, such that the chloroplatinic acid, the ruthenium chloride, and the graphene oxide were reduced to Pt, Ru and graphene respectively, and a Pt-Ru nano-alloy is obtained while Pt and Ru are coprecipitated, and an emulsion containing Pt-Ru nano-alloy and graphene is perpared; taking H₂PtCl₆, RuCl₃ for examples, KBH₄ is a reducing agent, the reaction equation is shown as follows:

   H₂PtCl₆+KBH₄→Pt+H₂↑+2HCl+KCl+BCl₃

   4RuCl₃+3KBH₄→4Ru+6H₂↑+₃KCl+3BCl₃
6. demulsification: a demulsifier (e.g., acetone or anhydrous ethanol, and volume of the demulsifier is 20 to 50% of a volume of cyclohexane) is added to the emulsion in the condition of ultrasonic vibration, and the Pt-Ru nano-alloy is loaded on the carrier of graphene, and a mixed system is prepared;
7. filtering, washing and drying: the mixed system is vacuum filtered, and washed by ethanol and deionized water for several times, filtrated to obtain a graphene loaded with Pt-Ru nano-alloy, then dried to obtain a Pt-Ru nano-alloy/graphene catalyst.

The Pt-Ru nano-alloy/graphene catalyst prepared by the method above contains graphene as a carrier, and a Pt-Ru nano-alloy is loaded on the graphene.

The Pt-Ru nano-alloy/graphene catalyst prepared according to the present invention can be used in the field of the proton exchange membrane fuel cell.

The Pt-Ru nano-alloy/graphene catalyst of the present invention uses graphene as a carrier and takes advantage of the ion effect and tow-dimensional ductility of graphene to increase the stability of the catalyst. The reverse micelles system provides a micro-environment (i.e. water-in-oil microemulsion), which is an ideal place for synthesis of metal nanoparticles, such that the particle size of the nano-alloy particles by this preparation method can be regulated easily and more uniformly distributed.

### BRIEF DESCRIPTION OF THE DRAWINGS

FIG. 1 is a flowchart of a preparation method of a Pt-Ru nano/graphene catalyst according to the present invention;
FIG. 2 is an EDS testing spectrum of the Pt-Ru alloy/graphene catalyst of the Example 1.

### DETAILED DESCRIPTION OF THE EMBODIMENTS

A preparation method of a Pt-Ru nano/graphene catalyst used in the proton exchange membrane fuel cell is provided in the present invention, a loadage of platinum is 5w% to 80w%, a graphene is used as a carrier in this kind of catalyst, the catalyst takes the advantages of the ion effect and tow-dimensional ductility of graphene to increase the stability of the catalyst.

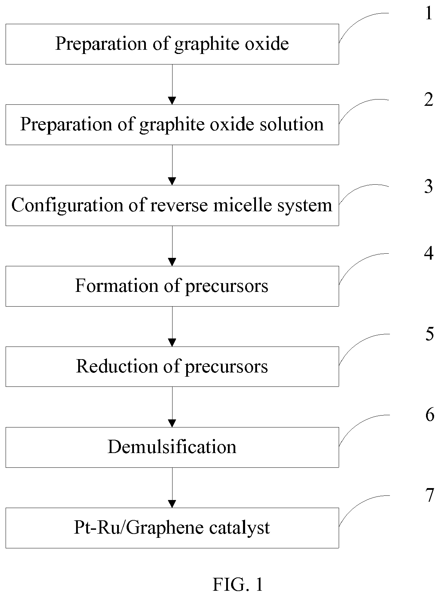

Referring to FIG. 1, the preparation of the Pt/graphene catalyst includes the steps of:
1. preparation of graphite oxide: a graphite oxide is prepared by using graphite powder according to a modified Hummers method;
2. preparation of graphite oxide solution: the prepared graphite oxide is added to water and dispersed by ultrasonic dispersion, a graphene oxide solution with uniform dispersion of monolithic layer is formed;
3. preparation of reverse micelle system: a mixed system containing a surfactant (anionic surfactant or cationic surfactant, such as sodium benzenesulfonate, sodium dodecylbenzenesulfonate, aliphatic sulfate and aliphatic quaternary ammonium salt, etc.), a cosurfactant (e.g., n-octanol, n-nonyl alcohol, n-heptanol and n-hexyl alcohol), an oil phase (e.g., cyclohexane) and a chloroplatinic acid (H₂PtCl₆, with a molar concentration of 0.04 mol/L) and a ruthenium chloride (RuCl₃, with a molar concentration of 0.04mol/L) aqueous solution is prepared at room temperature , a uniform and stable reverse micelle system is formed under the effect of ultrasonic; and a mass ratio of the surfactant, the cosurfactant and the oil phase is 10:7:1;
4. formation of precursors: the prepared graphene oxide solution is slowly added to the reverse micelle system dropwise;
5. reduction of precursors: the excess reducing agent (such as hydrazine hydrate or sodium borohydride, and a molar amount of the reducing agent is 3 to 10 times of a molar amount of the chloroplatinic acid) is added to the reverse micelle system in the water bath at a temperature of 80°C, so that the chloroplatinic acid, the ruthenium chloride, and the graphene oxide were reduced to Pt, Ru and graphene respectively, and a Pt-Ru nano-alloy is obtained while Pt and Ru are coprecipitated, so an emulsion containing Pt-Ru nano-alloy and graphene is prepared; now taking H₂PtCl₆, RuCl₃ for examples, KBH₄ is a reducing agent, the reaction is as follows:

   H₂PtCl₆+KBH₄→Pt+H₂↑+2HCl+KCl+BCl₃

   4RuCl₃+3KBH₄→4Ru+6H₂↑+₃KCl+3BCl₃
6. demulsification: a demulsifier (e.g., acetone or anhydrous ethanol, and volume of the demulsifier is 20 to 50% of a volume of cyclohexane) is added to the emulsion in the condition of ultrasonic vibration, and the Pt-Ru nano-alloy is loaded on the carrier of graphene, and a mixed system is prepared;
7. filtering , washing and drying: the mixed system is vacuum filtered, and washed by ethanol and deionized water for several times, filtrated to obtain a graphene loaded with Pt-Ru nano-alloy, then dried to obtain a Pt-Ru nano-alloy/graphene catalyst.

In the step of preparing the graphite oxide, including the following steps:
□. the graphite powder, a potassium persulfate and a phosphorus pentoxide are added to a concentrated sulfuric acid at a temperature of 80°C, and the mixture is stirred uniformly, then cooled for more than 6 hours, washed to neutral, and dried to obtain a sample;
□. The dried sample is added to 200mL to 250mL of concentrated sulfuric acid at a temperature of 0°C, and then a potassium permanganate is added, the mixture is heat preserved for 5 to 60 minutes at a temperature from 0°C to 20°C, then maintained for 1 to 2 hours in an oil bath at a temperature 35°C, and slowly added to a deionized water containing a hydrogen peroxide, a mixed solution is obtained; and
□. The mixed solution is hot filtered while the color of the mixed solution becomes bright yellow, then washed with hydrochloric acid, filtered, vacuum dried for 48 hours at a temperature of 60°C to obtain the graphite oxide.

The Pt-Ru nano-alloy/graphene catalyst prepared by the method above contains graphene as a carrier, and a Pt-Ru nano-alloy is loaded on the graphene.

The Pt-Ru nano-alloy/graphene catalyst prepared according to the present invention can be used in the field of the proton exchange membrane fuel cell.

The Pt-Ru nano-alloy/graphene catalyst of the present invention uses graphene as a carrier and takes advantage of the ion effect and tow-dimensional ductility of graphene to increases the stability of the catalyst. The catalyst is prepared by a reverse micelles system method which provides a micro-environment (i.e. water-in-oil microemulsion), which is an ideal place for synthesis of metal nanoparticles, such that the particle size of the nano-alloy particles by this preparation method can be regulated easily and more uniformly distributed.

The following preferred examples and drawings are provided to further illustrate the technical solutions of the present invention.

### Example 1

1. Preparation of graphite oxide: the graphite oxide was prepared according to the modified Hummers method. The specific steps were: 20g 50 mesh of graphite powder, 10g of potassium persulfate and 10g of phosphorus pentoxide were added to concentrated sulfuric acid at a temperature of 80°C, and the mixture was stirred uniformly, cooled for more than 6 hours, washed to neutral and dried to obtain a sample. The dried sample was added to 230mL of concentrated sulfuric acid at a temperature of 0°C, then 60g of potassium permanganate was added, the mixture was maintained below 20°C for 30 minutes, and then maintained in the oil bath at a temperature of 35°C for 2 hours, 920mL of deionized water was slowly added. 15 minutes later, 2.8L of deionized water (containing 50mL of hydrogen peroxide with a concentration of 30%) was then added, the mixture was hot filtrated while the color of the mixture became bright yellow, and then washed with 5L of hydrochloric acid with a concentration of 10%, filtrated, and vacuum dried for 48 hours at a temperature of 60°C to obtain the graphite oxide.
2. Preparation of graphite oxide solution: 0.5g of obtained graphite oxide was added to 200mL of water and dispersed by ultrasonic dispersion, a graphene oxide solution with uniform dispersion of monolithic layer was formed.
3. Preparation of reverse micelle system: aliphatic sulfate, n-hexanol and cyclohexane were mixed together with a mass ratio of 100:70:10, and water was added according to a molar ratio of the aliphatic sulfate and the water of 1:7 to obtain a mixed solution, the mixed solution was ultrasonic vibrated for 30 minutes, finally, chloroplatinic acid solution with a concentration of 0.04mol/L and ruthenium chloride solution with a concentration of 0.04mol/L of were slowly added to the mixed solution dropwise, and ultrasonic vibrated for 30 minutes to form a transparent reverse micelle system.
4. Formation of precursors: the prepared graphene oxide solution was slowly added to the reverse micelle system dropwise, ultrasonic vibrated for 30 minutes. A mass ratio of the platinum-ruthenium alloy and the graphene was 1:10.
5. Reduction of precursors: excess sodium borohydride was added to the reverse micelle system in a water bath at a temperature of 80°C, and then ultrasonic vibrated for 2 hours, such that the graphene oxide, the chloroplatinic acid and the ruthenium chloride were reduced respectively.
6. Demulsification: 30mL of demulsifier (acetone) was added to the reverse micelle system in the condition of ultrasonic vibration, then the system was stood until the system was stratified
7. Filtering, washing and drying: the solution was filtered, and then filter cake was washed with ethanol solution and deionized water for several times, and the obtained catalyst was vacuum dried for 2 hours at a temperature of 70°C, then a Pt-Ru nano-alloy/graphene catalyst was obtain.

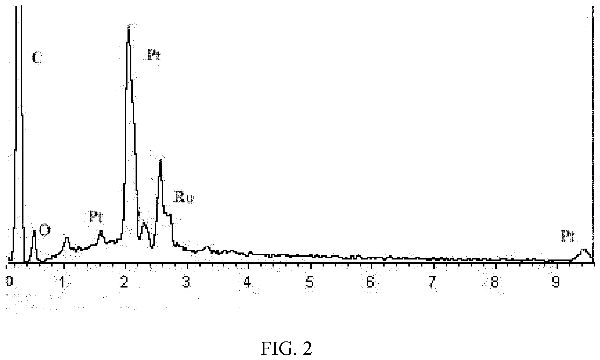

FIG. 2 was an EDS testing spectrum of the Pt-Ru alloy/graphene catalyst of the Example 1. As can be seen from the FIG. 2, the obtained catalyst mainly contained four elements of platinum (Pt), ruthenium (Ru), carbon (C) and oxygen (O). The area corresponding to the peak represented the percentage content of each element. It showed that the percentage content of carbon was much higher than the other elements, a mass ratio in the material was C:O:Pt:Ru=65:4:22:9 according to the calculation results of the peak area.

### Example 2

1. Preparation of graphite oxide: the graphite oxide was prepared according to the modified Hummers method. The specific steps were: 20g 50 mesh of graphite powder, 10g of potassium persulfate and 10g of phosphorus pentoxide were added to concentrated sulfuric acid at a temperature of 80°C, and the mixture was stirred uniformly, cooled for more than 6 hours, washed to neutral and dried to obtain a sample. The dried sample was added to 200mL of concentrated sulfuric acid at a temperature of 0°C, then 60g of potassium permanganate was added, the temperature of the mixture was maintained below 20°C for 5 minutes, and then maintained in the oil bath at a temperature of 35°C for 1 hour, 920mL of deionized water was slowly added. 15 minutes later, 2.8L of deionized water (containing 50mL of hydrogen peroxide with a concentration of 30%) was then added, the mixture was hot filtrated while the color of the mixture became bright yellow, and then washed with 5L of hydrochloric acid with a concentration of 10%, filtrated, and vacuum dried for 48 hours at a temperature of 60°C to obtain the graphite oxide.
2. Preparation of graphite oxide solution: 0.5g of obtained graphite oxide was added to 200mL of water and dispersed by ultrasonic dispersion, a graphene oxide solution with uniform dispersion of monolithic layer was formed.
3. Preparation of reverse micelle system: sodium benzenesulfonate, n-heptanol and cyclohexane were mixed together with a mass ratio of 100:70:10, and water was added according to a molar ratio of the sodium benzenesulfonate and the water of 1:7 to obtain a mixed solution, the mixed solution was ultrasonic vibrated for 30 minutes, and finally chloroplatinic acid solution with a concentration of 0.04mol/L and ruthenium chloride solution with a concentration of 0.04mol/L were slowly added to the mixed solution dropwise, and ultrasonic vibrated for 30 minutes to form a transparent reverse micelle system.
4. Formation of precursors: 10% to 60%, the prepared graphene oxide solution was slowly added to the reverse micelle system dropwise, ultrasonic vibrated for 30 minutes. A mass ratio of the platinum-ruthenium alloy and the graphene was 1:10.
5. Reduction of precursors: excess sodium borohydride was added to the reverse micelle system in a water bath at a temperature of 80°C, and then ultrasonic vibrated for 2 hours, such that the graphene oxide, the chloroplatinic acid and the ruthenium chloride were reduced respectively.
6. Demulsification: 20mL of demulsifier (acetone) was added to the reverse micelle system in the condition of ultrasonic vibration, then the system was stood until the system was stratified.
7. Filtering, washing and drying: the solution was filtered, and then filter cake was washed with ethanol solution and deionized water for several times, and the obtained catalyst was vacuum dried for 2 hours at a temperature of 70°C, then a Pt-Ru nano-alloy/graphene catalyst was obtain .

### Example 3

1. Preparation of graphite oxide: the graphite oxide was prepared according to the modified Hummers method. The specific steps were: 20g 50 mesh of graphite powder, 10g of potassium persulfate and 10g of phosphorus pentoxide were added to concentrated sulfuric acid at a temperature of 80°C, and the mixture was stirred uniformly, cooled for more than 6 hours, washed to neutral and dried to obtain a sample. The dried sample was added to 250mL of concentrated sulfuric acid at a temperature of 0°C, then 60g of potassium permanganate was added, the temperature of the mixture was maintained below 20°C, and then maintained in the oil bath at a temperature of 35°C for 2 hours, 920mL of deionized water was slowly added. 15 minutes later, 2.8L of deionized water (containing 50mL of hydrogen peroxide with a concentration of 30%) was then added, the mixture was hot filtrated while the color of the mixture became bright yellow, and then washed with 5L of hydrochloric acid with a concentration of 10%, filtrated, and vacuum dried for 48 hours at a temperature of 60°C to obtain the graphite oxide.
2. Preparation of graphite oxide solution: 0.5g of obtained graphite oxide was added to 200mL of water and dispersed by ultrasonic dispersion, a graphene oxide solution with uniform dispersion of monolithic layer was formed.
3. Preparation of reverse micelle system: dodecyl benzenesulfonic acid sodium salt, n-nonyl alcohol and cyclohexane were mixed together with a mass ratio of 100:70:10, and water was added according to a molar ratio of the dodecyl benzenesulfonic acid sodium salt and the water of 1:7 to obtain a mixed solution, the mixed solution was ultrasonic vibrated for 30 minutes, finally, chloroplatinic acid solution with a concentration of 0.04mol/L and ruthenium chloride solution with a concentration of 0.04mol/L were slowly added to the mixed solution dropwise, and ultrasonic vibrated for 30 minutes to form a transparent reverse micelle system.
4. Formation of precursors: 10% to 60%, the prepared graphene oxide solution was slowly added to the reverse micelle system dropwise, ultrasonic vibrated for 30 minutes. A mass ratio of the platinum-ruthenium alloy and the graphene was 1:10.
5. Reduction of precursors: excess hydrazine hydrate was added to the reverse micelle system in a water bath at a temperature of 80°C, and then ultrasonic vibrated for 2 hours, such that the graphene oxide, the chloroplatinic acid and the ruthenium chloride were reduced respectively.
6. Demulsification: 50mL of demulsifier (anhydrous ethanol) was added to the system emulsion above in the condition of ultrasonic vibration, then the system was stood until the system was stratified.
7. Filtering, washing and drying: the solution was filtered, and then filter cake was washed with ethanol solution and deionized water for several times, and the obtained catalyst was vacuum dried for 2 hours at a temperature of 70°C, then a Pt-Ru nano-alloy /graphene catalyst was obtain .

### EXAMPLE 4

1. Preparation of graphite oxide: the graphite oxide was prepared according to the modified Hummers method. The specific steps were: 20g 50 mesh of graphite powder, 10g of potassium persulfate and 10g of phosphorus pentoxide were added to concentrated sulfuric acid at a temperature of 80°C, and the mixture was stirred uniformly, cooled for more than 6 hours, washed to neutral and dried to obtain a sample. The dried sample was added to 240mL of concentrated sulfuric acid at a temperature of 0°C, then 60g of potassium permanganate was added, the temperature of the mixture was maintained below 20°C, and then maintained in the oil bath at a temperature of 35°C for 2 hours, 920mL of deionized water was slowly added. 15 minutes later, 2.8L of deionized water (containing 50mL of hydrogen peroxide with a concentration of 30%) was then added , the mixture was hot filtrated immediately while the color of the mixture became bright yellow, and then washed with 5L of hydrochloric acid with a concentration of 10%, filtrated, and vacuum dried for 48 hours at a temperature of 60°C to obtain the graphite oxide.
2. Preparation of graphite oxide solution: 0.5g of obtained graphite oxide was added to 200mL of water and dispersed by ultrasonic dispersion, a graphene oxide solution with uniform dispersion of monolithic layer was formed.
3. Preparation of reverse micelle system: quaternary ammonium salts, n-octanol and cyclohexane were mixed together with a mass ratio of 100:80:10, and water was added according to a molar ratio of the aliphatic quaternary ammonium salts and the water of 1:8 to obtain a mixed solution, the mixed solution was ultrasonic vibrated for 30 minutes, finally, chloroplatinic acid solution with a concentration of 0.04mol/L and ruthenium chloride solution with a concentration of 0.04mol/L were slowly added dropwise to the mixed solution, and ultrasonic vibrated for 30 minutes to form a transparent reverse micelle system.
4. Formation of precursors: 10% to 60%, the prepared graphene oxide solution was slowly added dropwise to the reverse micelle system, ultrasonic vibrated for 30 minutes. A mass ratio of the platinum-ruthenium alloy and the graphene was 1:10.
5. Reduction of precursors: excess sodium borohydride was added to the reverse micelle system in a water bath at a temperature of 80°C, and then ultrasonic vibrated for 2 hours, such that the graphene oxide, the chloroplatinic acid and the ruthenium chloride were reduced respectively.
6. Demulsification: 30mL of demulsifier (acetone) was added to the reverse micelle system in the condition of ultrasonic vibration, then the system was stood until the system was stratified.
7. Filtering, washing and drying: the solution was filtered, and then filter cake was washed with ethanol solution and deionized water for several times, and the obtained catalyst was vacuum dried for 2 hours at a temperature of 70°C, then a nano-alloy Pt-Ru/graphene catalyst was obtain.

It should be understood that the descriptions of the examples are specific and detailed, but those descriptions can't be used to limit the present disclosure. Therefore, the scope of protection of the invention patent should be subject to the appended claims.

## Claims

1. A preparation method of a Pt-Ru nano-alloy/graphene catalyst, comprising the following steps:
oxidizing graphite powder to obtain a graphite oxide according to a Hummers method, comprising the steps:
20g 50 mesh of graphite powder, lOg of potassium persulfate and lOg of phosphorus pentoxide were added to concentrated sulfuric acid at a temperature of 80° C, and the mixture was stirred uniformly, cooled for more than 6 hours, washed to neutral and dried to obtain a sample, the dried sample was added to 200 to 250 mL of concentrated sulfuric acid at a temperature of 0° C, then 60 g of potassium permanganate was added, the mixture was heat preserved for 5 to 60 minutes at a temperature from 0° C to 20° C, and then maintained in the oil bath at a temperature of 35° C for 1 to 2 hours, 920 mL of deionized water was slowly added, 15 minutes later, 2.8 L of deionized water containing 50 mL of hydrogen peroxide with a mass percentage concentration of 30% was then added, the mixture was hot filtrated while the color of the mixture became bright yellow, and then washed with 5 L of hydrochloric acid with a concentration of 10%, filtrated, and vacuum dried for 48 hours at a temperature of 60° C to obtain the graphite oxide; adding the graphite oxide to water, forming a graphene oxide solution with uniform dispersion of monolithic layer after ultrasonic dispersion;
preparing a reverse micellar system containing a surfactant, a cosurfactant, an oil phase, a chloroplatinic acid, and a ruthenium chloride aqueous solution at room temperature;
adding the graphene oxide solution to the reverse micelle system dropwise, and adding a reducing agent dropwise in a water bath, performing a reduction reaction to obtain an emulsion containing Pt-Ru nano-alloy and graphene;
adding a demulsifier to the emulsion dropwise, and loading the Pt-Ru nano-alloy on a carrier of graphene; and
filtering, washing, drying the graphene loaded with Pt-Ru nano-alloy to obtain the Pt-Ru nano-alloy/graphene catalyst.

2. The preparation method according to claim 1, wherein a mass of the potassium permanganate is 3 times of a mass of the graphite powder.

3. The preparation method according to claim 1, wherein the surfactant is selected from the group consisting of sodium benzenesulfonate, sodium dodecyl benzenesulfonate, aliphatic sulfate and aliphatic quaternary ammonium salt; the cosurfactant is selected from the group consisting n-octanol, n-nonyl alcohol, n-heptanol and n-hexyl alcohol; the oil phase is cyclohexane; a molar concentration of the chloroplatinic acid is 0.04 mol/L, a molar concentration of the ruthenium chloride aqueous solution is 0.04 mol/L; a mass ratio of the surfactant, the cosurfactant and the oil phase is 10:7:1.

4. The preparation method according to claim 1, wherein a mass ratio of the Pt-Ru nano-alloy and the graphene in the emulsion containing Pt-Ru nano-alloy and graphene is 1:10.

5. The preparation method according to claim 1, wherein the reducing agent is hydrazine hydrate or sodium borohydride, a molar amount of the reducing agent is 3 to 10 times of a molar amount of the chloroplatinic acid.

6. The preparation method according to claim 1, wherein the demulsifier is acetone or anhydrous ethanol.

## Patentansprüche

1. Herstellungsverfahren für einen Pt-Ru-Nanolegierungs-/Graphenkatalysator, welches die folgenden Schritte umfasst:
Oxidieren von Graphitpulver, um ein Graphitoxid gemäß einer Hummers-Methode zu erhalten, umfassend die Schritte:
20 g Graphitpulver (50 mesh), 10 g Kaliumpersulfat und 10 g Phosphorpentoxid wurden zu konzentrierter Schwefelsäure mit einer Temperatur von 80 °C gegeben, und die Mischung wurde gleichförmig gerührt, mehr als 6 Stunden gekühlt, bis zur Neutralität gewaschen und getrocknet, um eine Probe zu erhalten, die getrocknete Probe wurde zu 200 bis 250 mL konzentrierter Schwefelsäure mit einer Temperatur von 0 °C gegeben, dann wurden 60 g Kaliumpermanganat zugegeben, die Mischung 5 bis 60 Minuten bei einer Temperatur von 0 °C bis 20 °C wärmekonserviert und dann 1 bis 2 Stunden bei einer Temperatur von 35 °C in dem Ölbad gehalten, es wurden langsam 920 mL entionisiertes Wasser zugegeben, 15 Minuten später wurden 2,8 L entionisiertes Wasser, das 50 mL Wasserstoffperoxid mit einer Massenprozentkonzentration von 30 % enthielt, zugefügt, die Mischung wurde heiß filtriert, während die Farbe der Mischung leuchtend gelb wurde, und dann mit 5 L Salzsäure mit einer Konzentration von 10 % gewaschen, filtriert und 48 Stunden bei einer Temperatur von 60 °C vakuumgetrocknet, um das Graphitoxid zu erhalten;
Zufügen des Graphitoxids zu Wasser, Bilden einer Graphenoxidlösung mit gleichförmiger Dispersion der monolithischen Schicht nach Ultraschalldispersion;
Herstellen eines Umkehrmicellensystems, das ein Tensid, ein Cotensid, eine Ölphase, eine Chlorplatinsäure und eine wässrige Rutheniumchloridlösung enthält, bei Raumtemperatur;
tropfenweises Zufügen der Graphenoxidlösung zu dem Umkehrmicellensystem, und tropfenweises Zufügen eines Reduktionsmittels in einem Wasserbad, Durchführen einer Reduktionsreaktion, um eine Emulsion zu erhalten, die Pt-Ru-Nanolegierung und Graphen enthält;
tropfenweises Zufügen eines Demulgators zu einer Emulsion und Laden der Pt-Ru-Nanolegierung auf den Träger aus Graphen; und
Filtern, Waschen, Trocknen des mit Pt-Ru-Nanolegierung beladenen Graphens, um den Pt-Ru-Nanolegierungs-/Graphenkatalysator zu erhalten.

2. Herstellungsverfahren nach Anspruch 1, wobei die Masse des Kaliumpermanganats das 3-fache der Masse des Graphitpulvers ist.

3. Herstellungsverfahren nach Anspruch 1, wobei das Tensid ausgewählt ist aus der Gruppe bestehend aus Natriumbenzolsulfonat, Natriumdodecylbenzolsulfonat, aliphatischem Sulfat und aliphatischem quaternären Ammoniumsalz; das Cotensid ausgewählt ist aus der Gruppe bestehend aus n-Octanol, n-Nonylalkohol, n-Heptanol und n-Hexylalkohol; die Ölphase Cyclohexan ist; eine molare Konzentration der Chlorplatinsäure 0,04 mol/L beträgt, eine molare Konzentration der wässrigen Rutheniumchloridlösung 0,04 mol/L beträgt; das Massenverhältnis des Tensids, des Cotensids und der Ölphase 10:7:1 beträgt.

4. Herstellungsverfahren nach Anspruch 1, wobei ein Massenverhältnis der Pt-Ru-Nanolegierung und des Graphens in der Emulsion, die Pt-Ru-Nanolegierung und Graphen enthält, 1:10 ist.

5. Herstellungsverfahren nach Anspruch 1, wobei das Reduktionsmittel Hydrazinhydrat oder Natriumborhydrid ist, eine molare Menge des Reduktionsmittels das 3- bis 10-fache der molaren Menge der Chlorplatinsäure ist.

6. Herstellungsverfahren nach Anspruch 1, wobei der Demulgator Aceton oder wasserfreies Ethanol ist.

## Revendications

1. Procédé de préparation d'un catalyseur en nano-alliage de Pt-Ru/graphène, comprenant les étapes suivantes :
l'oxydation de poudre de graphite pour obtenir un oxyde de graphite selon une méthode de Hummers, comprenant les étapes : 20 g de poudre de graphite 50 mesh, 10 g de persulfate de potassium et 10 g de pentoxyde de phosphore ont été ajoutés à de l'acide sulfurique concentré à une température de 80 °C et le mélange a été agité uniformément, refroidi pendant plus de 6 heures, lavé jusqu'à ce qu'il soit neutre et séché pour obtenir un échantillon, l'échantillon séché a été ajouté à 200 à 250 ml d'acide sulfurique concentré à une température de 0 °C, puis 60 g de permanganate de potassium a été ajouté, le mélange a été préservé de la chaleur pendant 5 à 60 minutes à une température de 0 °C à 20 °C et ensuite maintenu dans le bain d'huile à une température de 35 °C pendant 1 à 2 heures, 920 ml d'eau désionisée a été ajoutée lentement, 15 minutes plus tard, 2,8 l d'eau désionisée contenant 50 ml de peroxyde d'hydrogène à une concentration en pourcentage en masse de 30 % a ensuite été ajoutée, le mélange a été filtré à chaud alors que la couleur du mélange est devenue jaune vif et ensuite lavé avec 5 l d'acide chlorhydrique à une concentration de 10 %, filtré et séché sous vide pendant 48 heures à une température de 60 °C pour obtenir l'oxyde de graphite ;
l'ajout de l'oxyde de graphite à de l'eau, la formation d'une solution d'oxyde de graphène avec la dispersion uniforme de couche monolithique après dispersion par des ultrasons ;
la préparation d'un système micellaire inverse contenant un tensioactif, un co-tensioactif, une phase huileuse, un acide chloroplatinique et une solution aqueuse de chlorure de ruthénium à température ambiante ;
l'ajout goutte à goutte de la solution d'oxyde de graphène au système micellaire inverse et l'ajout goutte à goutte d'un agent réducteur dans un bain d'eau, la mise en oeuvre d'une réaction de réduction pour obtenir une émulsion contenant un nano-alliage de Pt-Ru et du graphène ;
l'ajout goutte à goutte d'un désémulsifiant à l'émulsion et la charge du nano-alliage de Pt-Ru sur un support de graphène ; et
la filtration, le lavage, le séchage du graphène chargé de nano-alliage de Pt-Ru pour obtenir le catalyseur en nano-alliage de Pt-Ru/graphène.

2. Procédé de préparation selon la revendication 1, dans lequel une masse du permanganate de potassium est de 3 fois une masse de la poudre de graphite.

3. Procédé de préparation selon la revendication 1, dans lequel le tensioactif est choisi dans le groupe constitué par le benzènesulfonate de sodium, le dodécylbenzènesulfonate de sodium, un sulfate aliphatique et un sel d'ammonium quaternaire aliphatique ; le co-tensioactif est choisi dans le groupe constitué par le *n*-octanol, l'alcool *n*-nonylique, le *n-*heptanol et l'alcool *n*-hexylique ; la phase huileuse est du cyclohexane ; une concentration molaire de l'acide chloroplatinique est de 0,04 mol/l, une concentration molaire de la solution aqueuse de chlorure de ruthénium est de 0,04 mol/l ; un rapport massique du tensioactif, du co-tensioactif et de la phase huileuse est de 10:7:1.

4. Procédé de préparation selon la revendication 1, dans lequel un rapport massique du nano-alliage de Pt-Ru et du graphène dans l'émulsion contenant un nano-alliage de Pt-Ru et du graphène est de 1:10.

5. Procédé de préparation selon la revendication 1, dans lequel l'agent réducteur est l'hydrate d'hydrazine ou le borohydrure de sodium, une quantité molaire de l'agent réducteur est de 3 à 10 fois une quantité molaire de l'acide chloroplatinique.

6. Procédé de préparation selon la revendication 1, dans lequel le désémulsifiant est l'acétone ou l'éthanol anhydre.
